# EUROPEAN PATENT APPLICATION

(11) **EP 2 933 940 A1**
(43) Date of publication of application: **21.10.2015**
(21) Application number: 15162876.5
(22) Date of filing: 09.04.2015
(51) Int. Cl.: H04H 60/04

(54) **METHOD AND SYSTEM FOR A SMART MIXING CONSOLE**

(30) Priority: 15.04.2014 US 201414252821
(71) Applicant: Harman International Industries, Incorporated, Stamford, Connecticut 06901 (US)
(72) Inventor: Sukumar, Sujeeth, 560102 Bangalore (IN)
(74) Representative: Grünecker Patent- und Rechtsanwälte PartG mbB

(57) **Abstract**

A mixing console having a user interface displaying a path of one or more menu options based on a user's historical operation of the console. The mixing console having a computer in communication with a transceiver, the transceiver capable of communication with a server remotely located from the computer, the computer may receive a user log-in and monitor a selection of the one or more menu options from the user interface. The controller may record and rank the selection of the one or more menu options and output at the user interface the path of menu and submenu tabs based on the recorded and ranked selection of the one or more menu options. The computer may save to memory the list of menu and submenu item selections based on the user log-in.

## Description

### TECHNICAL FIELD

The disclosure relates to an audio mixing console, and more specifically to an audio mixing console that includes a smart learn configuration feature to improve and simplify operation of the console.

### BACKGROUND

Audio mixing consoles are widely employed for processing of audio signals of different kinds and numbers. For example, a number of input audio signals may be processed, i.e., amplified or mixed or enhanced with/without certain audio effects, and then output as an audio output signal to one or more consuming units, such as amplifiers, loudspeakers, headphones and/or recording means. Environments where such audio mixing consoles find application include, but are not limited to: onstage performances, recording studios, presentations, places of worship, theater, tradeshows, etc. Often, in such situations it may be desirable to provide a simplified user operation based on time constraints and enhanced mobility of the mixing console.

### SUMMARY

In a first illustrative embodiment, a mixing console having a user interface displaying a path of one or more menu options based on a user's historical operation of the console is provided. The mixing console includes a computer in communication with a transceiver. The transceiver is capable of communication with a server that is remotely located from the computer. The computer may receive a user log-in and monitor a selection of the one or more menu options from the user interface. The computer may record and rank the selection of the one or more menu options and output, at the user interface, the path of menu and submenu tabs based on the recorded and ranked selection of the one or more menu options. The computer may receive a new selection based on the one or more menu options. The computer may save to memory the new selection of menu and submenu item selections based on the user log-in.

In a second illustrative embodiment, an audio mixing console smart learn method for communicating with a user interface and at least one processor is provided. The method may receive a user log-in from an audio mixing console user interface. Based on the recognized user login, the method may retrieve a preferred user selection database. The method may present a path of menu and submenu options based on the preferred user selection database. The method may monitor a selection of one or more menu options at the user interface. The method may rank the selection of the one or more menu options and display the options as a path of most preferred options at the user interface. The method may record the selection of the one or more menu options and transmit to memory for storage the path of menu and submenu items selected based on the user log-in.

In a third illustrative embodiment, an audio mixing console system including at least one controller configured to receive a set of instructions to perform a setup of one or more channel strips is provided. The system may retrieve at least one configuration based on at least a portion of the set of instructions, and output to a display a path of menu selections based on the at least one configuration for the setup of the one or more channel strips. The system may monitor the selection of the path of menu selections and update the path of menu selections if a new selection not in the path is selected. The system may output to the display the updated path of menu selections based on the new selection, and transmit the updated path of menu selections to memory.

### BRIEF DESCRIPTION OF THE DRAWINGS

Figure 1A is a top view of an example of an audio mixing console according to an embodiment;
Figure 1B is a block topology of an audio mixing computing system for an audio mixing console according to an embodiment;
Figure 2 is a flow chart of an algorithm for a user interface menu selection for an audio mixing console according to an embodiment;
Figure 3 is a diagram of a user preference display database of menu and submenu options using a smart learn logic monitoring database according to an embodiment;
Figure 4 is a diagram of a menu and submenu display illustrating a user preference at an audio mixing console interface according to an embodiment;
Figure 5 is a flow chart of an algorithm for outputting menu and submenu selections to a user interface of an audio mixing console according to an embodiment; and
Figure 6 is a diagram of a menu selection interface for an audio mixing console according to an embodiment.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

The embodiments of the present disclosure generally provide for a plurality of circuits or other electrical devices. All references to the circuits and other electrical devices and the functionality provided by each, are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform operation(s) disclosed herein. In addition, any one or more of the electric devices may be configured to execute a computer-program that is embodied in a non-transitory computer readable medium that is programmed to perform any number of the functions as disclosed.

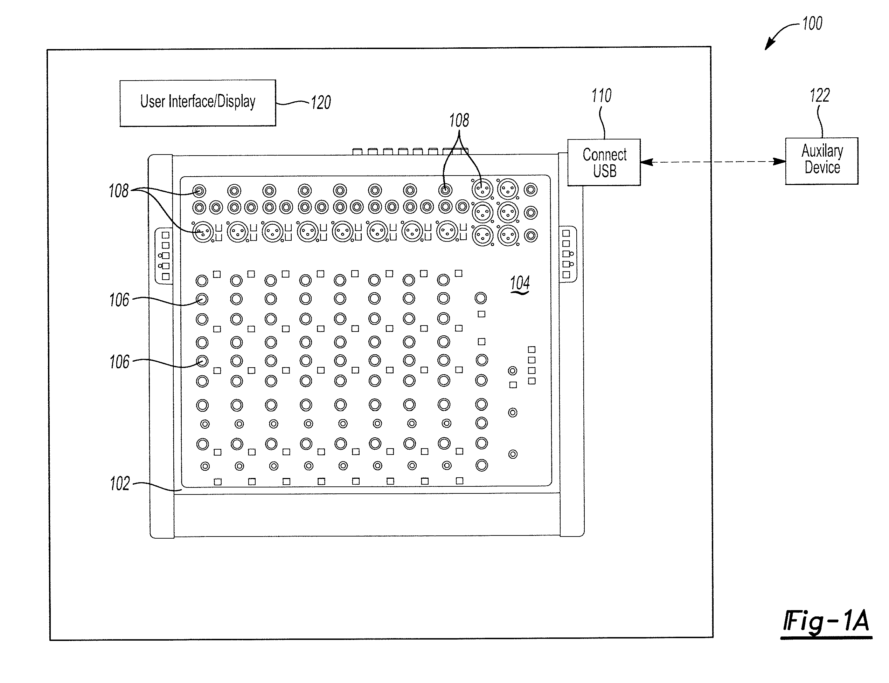

Figure 1A is a top view of an example of an audio mixing console 100 comprising a main housing 102. The main housing 102 of the audio mixing console 100 may have outer surfaces including the control surface 104. The control surface 104 has a plurality of operating elements 106 which allow control of processing of audio signals. Processing can refer to, for example, altering the characteristics of an audio signal based on frequency or amplitude, or enhancing the audio signal with certain audio effects (time based processing), such as Reverb or Delay. Also, a number of audio input and output connectors 108 may be provided on the control surface 104. These connectors 108 are adapted to receive/send input audio signals and output audio signals, respectively. Audio connectors 108 may be provided on the back or side of the main housing outer surface. A power connecter (not shown) may be provided on the side or back of the main housing outer surface.

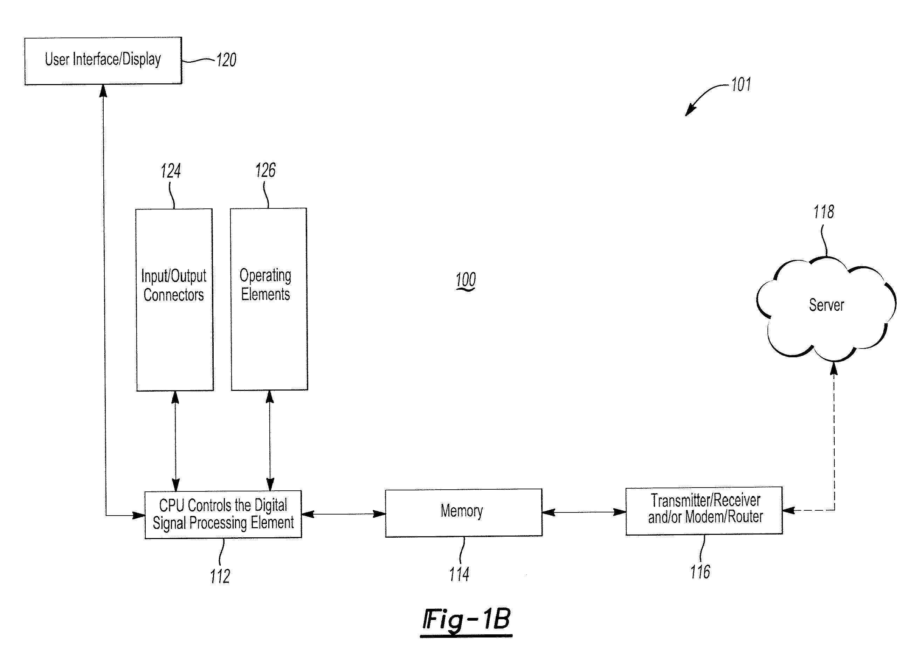

Figure 1B is a block topology of an audio mixing computing system 101 for the audio mixing console 100 according to an embodiment. The audio mixing computing system 101 may include, but is not limited to, having at least one controller processing unit (e.g., computer) 112, RAM/ROM memory 114, and a transmitter/receiver 116. The computer 112 may control at least some portion of the operation of the console 100 including the digital signal processing element of the audio mixing console 100. Provided within the mixing console 100, the computer 112 allows onboard processing of commands and routines. Further, the computer 112 is connected to both non-persistent and persistent storage. In this illustrative embodiment, the non-persistent storage is random access memory 114 and the persistent storage is a hard disk drive (HDD) or flash memory. In general, persistent (non-transitory) memory can include all forms of memory that maintain data when a computer 112 or other device is powered down. These include, but are not limited to, HDDs, CDs, DVDs, magnetic tapes, solid state drives, portable USB drives and any other suitable form of persistent memory.

The computer 112 is also provided with a number of different inputs allowing a user to interface with the computer 112. The audio mixing console 100 may comprises a user interface 120 (e.g., an LCD touchscreen display), a USB input 110, and audio input and output connectors 108 are all provided. The computer 112 may be in communication with several input/output connectors 124, and/or operating elements 126. The computer 112 in communication with input/output connectors 124 may be configured to process the signals received via the input connection, and/or transmit processed signals via the output connection. The operating elements 126 may include, but is not limited to, control of knobs, switches, and/or faders. Although not shown, numerous audio mix console components and auxiliary components 122 in communication with the computer 112 may use a mixer network (not shown) to pass data to and from the computer 112 (or components thereof).

In one illustrative embodiment, the transceiver 116 may be used to communicate with several devices including, but not limited to, a remote server 118, a smart phone (not shown), or any other device having wireless connectivity. The computer 112 (e.g., at least one processor) could be connected to a wireless router, using for example a WiFi transceiver. This could allow the computer 112 to connect to remote networks in range of the local router.

Data may be communicated between the computer 112 and the server 118 utilizing, for example, wireless technology including, but not limited to, WiFi, data over voice, or Dual-tone multi-frequency (DTMF) tones. The computer 112 may be provided with an operating system including an application programming interface (API) to communicate with modem application software when executed with hardware in the computer 112. The modem application software may access an embedded module or firmware on the server transceiver to complete wireless communication with a remote server transceiver. WiFi is a subset of IEEE LAN (local area network) protocols and are suitable for wireless communication with an audio mixing console and a server.

In one embodiment, incoming data from the server 118 may be received from the audio mixing console 100 and sent to the internal computer 112. In the case of certain temporary data, for example, the data can be stored on the HDD or other storage media until such time as the data is no longer need. The audio mixing console 100 may also receive data from one or more auxiliary devices 122 using the USB port 110 (as shown in Figure 1A). The audio mixing console 100 may be compatible with the following serial bus interface standards for communication with one or more auxiliary devices 122 including IEEE 1394 (FireWire™ (Apple), i.LINK™ (Sony), and Lynx™ (Texas Instruments)), EIA (Electronics Industry Association) serial protocols, IEEE 1284 (Centronics Port), S/PDIF (Sony/Philips Digital Interconnect Format) and USB-IF (USB Implementers Forum).

Further, the computer 112 may be in communication with a variety of other auxiliary devices. Such auxiliary devices may include, but is not limited to, handheld devices (e.g., laptop, tablet, mobile phone), headphone, and/or a keyboard. These devices can be connected through a wireless or wired connection.

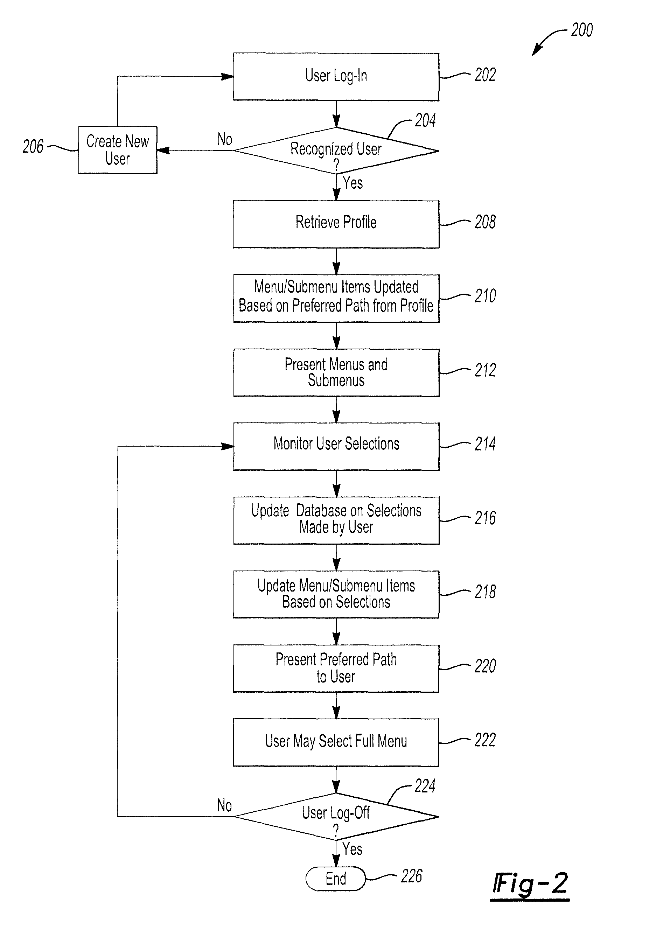

Figure 2 is a flow chart of an algorithm for a user interface menu formatting method 200 for an audio mixing console 100 according to an embodiment. The method 200 may be implemented using software code included within the computer 112 and executed on hardware in the audio mixing console 100, or distributed among multiple console controllers.

Referring again to Figure 2, the mixing console 100 and its components illustrated in Figure 1A and 1B are referenced throughout the discussion of the method to facilitate understanding of various aspects of the present disclosure. The method of formatting and outputting user interface menu options/selections may be implemented through a computer algorithm, machine executable code, or software instructions programmed into a suitable programmable logic device(s) of the audio mixing console, such as the control module, the Aux device control module, other controller in communication with the audio mixing console, or a combination thereof. Although the various operations shown in the flowchart diagram 200 appear to occur in a chronological sequence, at least some of the operations may occur in a different order, and some operations may be performed concurrently or not at all.

At operation 202, the audio mixing console 100 may request a user login identifier before allowing operation of the console. The request for the user login identifier enables the console 100 to recognize a user and allow the recognized user to obtain access to the system 101. The user may login using a user interface 120 which may include, but is not limited to, a touch screen, a keyboard, mouse, or a combination thereof. The system 101 may determine whether the user is a recognized user by either retrieved authorized user information from the system memory 114 and/or remotely from a database in communication with the audio mixing console 100 at operation 204.

At operation 206, the system 101 may not recognize the login user and may take several actions including, but not limited to, registering the user to create a user profile, lock the audio mixing console for a period amount of time after a predetermined number of failed login attempts, and/or request the user to enter additional information to verify user. If the user is recognized and approved as an authorized user, the system may retrieve the profile stored in memory on the device and/or stored in a cloud database in communication with the device at operation 208.

At operation 210, the retrieved profile for the authorized user may include, but is not limited to, menu and/or submenu items that are based on the authorized user's historical selections and/or preferred settings. The user preferred formatting path of menu and/or submenu items may include the historical selection of options regarding audio mixing console setup options and configurations, add or removing processing objects, patching items to individual speakers, and/or monitoring selections.

At operation 212, the system 101 may present to the user the user preferred path of one or more menu and/or submenu items at the audio mixing console display based on data of the user's historical selection. The system 101 may configure the menu and/or submenu items in a ranked particular order such that the presentation of frequently used options may be presented at the display in a hierarchal structure. For example, the system 101 may present the higher ranked submenu tabs with their respective options based on a menu selection that may allow a user to quickly navigate to one or more desired options. The previous method may have required making additional selections between submenus and scrolling through all the related options under that submenu tab before a user may find the desired option. The method 200 disclosed may eliminate the need to scroll through multiple submenu tabs and all the related options before a user makes their desired selection. The system may monitor the user selections during the operation of the audio mixing console 100 at operation 214.

At operation 216, the system 101 may update a database based on selections made by the user during the operation of the audio mixing console 100 and store the data in memory 114 or at a remote server 118. Based on the historical database of previous selections by the user, the system 101 may update the selections of the user's preferred menu and/or submenu items to be displayed on the user interface 120 during operation of the console at operation 218. The system 101 may also monitor and record the options being selected under each menu and/or submenu. The system 101 may rank the data based on the most selected submenu and/or options, such that the highest ranked selections are presented to a user based on a menu and/or submenu selection. The system 101 may output and present at the console display the preferred/predictive path of menu and/or submenu tabs to the user during operation of the mixing console based on the analysis of data at operation 220.

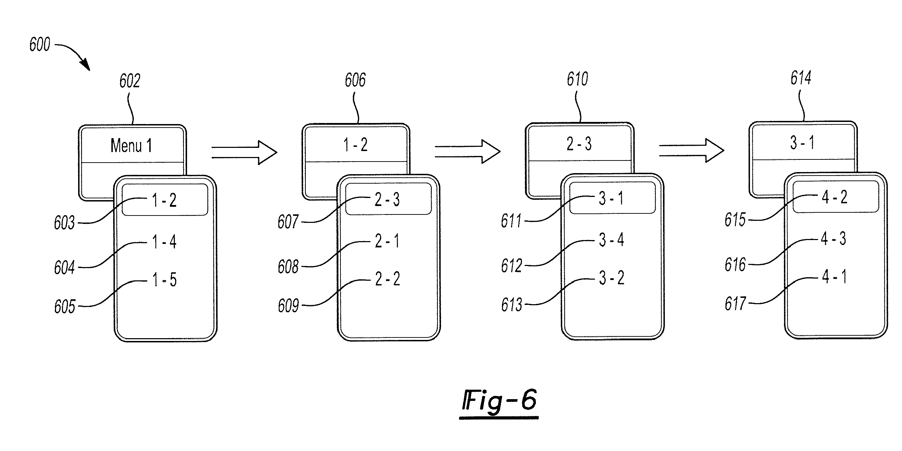

For example, the generated preferred path for a certain menu selection allows the system 101 to present at a user interface 120 a predictive path to one or more features/functions under a menu and/or submenu tab(s). The menu selection causing a path of one or more features/functions is based on the monitored use of the console 100. The monitored use of menu/submenu/option selections are continuously updated, ranked, and stored at a database. The presented menu and/or submenu tab(s) may have a list of related options for that tab. The list of options presented to a user may also be ranked according to the most selected option(s) under that menu/submenu tab. This allows the user to operate the console in a more efficient way instead of viewing all options offered under that menu/submenu folder and/or navigating through multiple menu/submenu pages before getting to a user's desired selection. The output and layout of a preferred path display on a user interface screen will be discussed further in Figure 6.

At operation 222, the system 101 allows the user to view all options/selections under the menu and/or submenu folder if the user chooses to view all items. For example, the user may double click using the mouse to view all items/options under a menu/submenu tab instead of just the top ranked selections that are presented based on the historical preferred use of the logged-in user. The system 101 may continue to monitor the logged-in user's selections to update the database and present the preferred menu/submenu items to a user at operation 224. If the user decides to log-off, the console 100 may store the monitored selections made by the user in memory 114 at the console 100 or transmit the information to a remote database in communication with the console for later retrieval at operation 226.

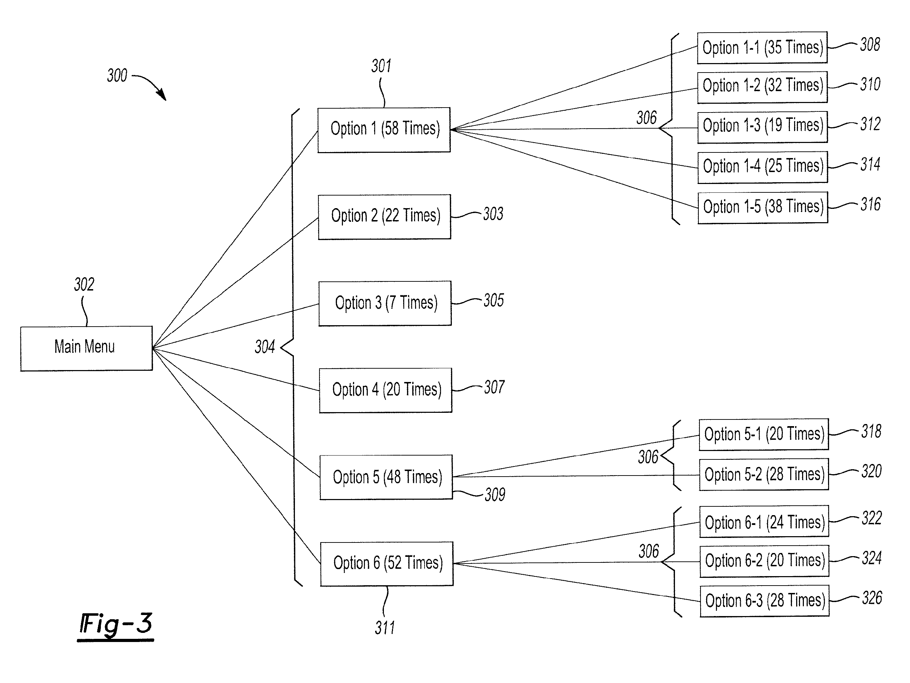

Figure 3 illustrates a user preference database 300 for an audio mixing console 100 using smart learn logic monitoring. The smart learn logic monitoring method outputs a user's preference at the mixing console user interface 120 display. The smart learn logic may be running locally at the audio mixing console computing system 101 and/or remotely using a cloud computing server 118 that is in communication with the console's computing system 101. The smart learn logic may store/save information within local memory 114 at the audio console mixer computing system and/or at a remote database in communication with the audio mixing console computing system.

The smart learn data may be retrieved by the console's computing system 101 by associating the historical user selection data with a user based on a user login ID in combination with a password or other credentials for the purposes of security, logging, and management of the user's preferences. An example of a user login ID may include, but is not limited to, the use of biometrics verification systems (e.g., fingerprint scanner). Once the system 101 detects a user it may retrieve the preferred data and continue to update the dataset by monitoring the menu/submenu/option choices the user selects.

As show in Figure 3, the monitoring database 300 illustrates the most preferred submenu and/or options historically selected by a user related to the main menu item 302. The database 300 monitors a main menu 302 selection and the related one or more submenu tabs 304 and related options 306 selected by a user. In this database example, the main menu 302 may have six submenu tabs 304 that a user can select from and based on previous historical selections the system 101 may output to a user interface 120 the top ranked items (e.g., present three of the six submenu tabs) that have been most frequently selected by the user.

For example, based on the monitored data 300 the three most frequently selected submenu tabs that would display on a user interface 120 if main menu item 302 was selected may include option-1 301, option-5 309, and option-6 311. The user may select to display all options based on a defined user settings and/or requesting all options by a sequence of user input (e.g., tapping the user interface touch screen two times to request the display of all options).

The smart learn logic may enable the system 101 to output a predictive path including submenu tabs 301, 309, 311 with their respective options 306 based on the user's monitored historical selections for that main menu item 302 selected. The system 101 may output the most frequently selected (e.g., highest ranked) options 306 related to the submenu tabs 304 allowing a user to quickly select the mixing console functions/features of interest. The system 101 may display a path of all the next tier options related to the submenu options 306 on the mixing console user interface 120 or only display the top ranked two or three next tier submenu options that have been most frequently selected by the user based on historical use of the operation of the console 100.

For example, the system 101 may output submenu tabs 304 including option-1 301, option-5 309, and option-6 311 with the following next tier submenu options 306 including option-1-1 308, option-1-2 310, option-1-5 316, option-5-1 316, option-5-2 320, option-6-1 322, option-6-2 324, and/or option-6-3 326 to be formatted in a hierarchy structure for display at a user interface 120. The user may select to display all next tier submenu options 306 by tapping the user interface 120 touch screen or using a keyboard/mouse to request the display of all options at the user interface 120.

The smart learn logic allows the system 101 to output a user interface display of preferred options to a recognized user which ensures quick and easy console operation. For example, the smart learn logic output enables a user to perform a setup of the console in a smooth workflow, short setup time, and in a fluent working process based on the user interface display. The smart learn logic may eliminate the user from navigating through two or more menu and/or submenu items to enable the feature/function of interest at the mixing console.

In another example, a broadcast production facility with numerous engineers and freelancers may benefit from having an easy to use mixing console 100 that may monitor a user's operation of the audio board including, but not limited to, rotary controls, buttons within a flat screen display 120, and faders. The monitored use may allow the system 101 to display the most important menu parameters to the user at the user interface display for immediately adjusting menu, submenu options and/or next tier related submenu options most preferred by a recognized user.

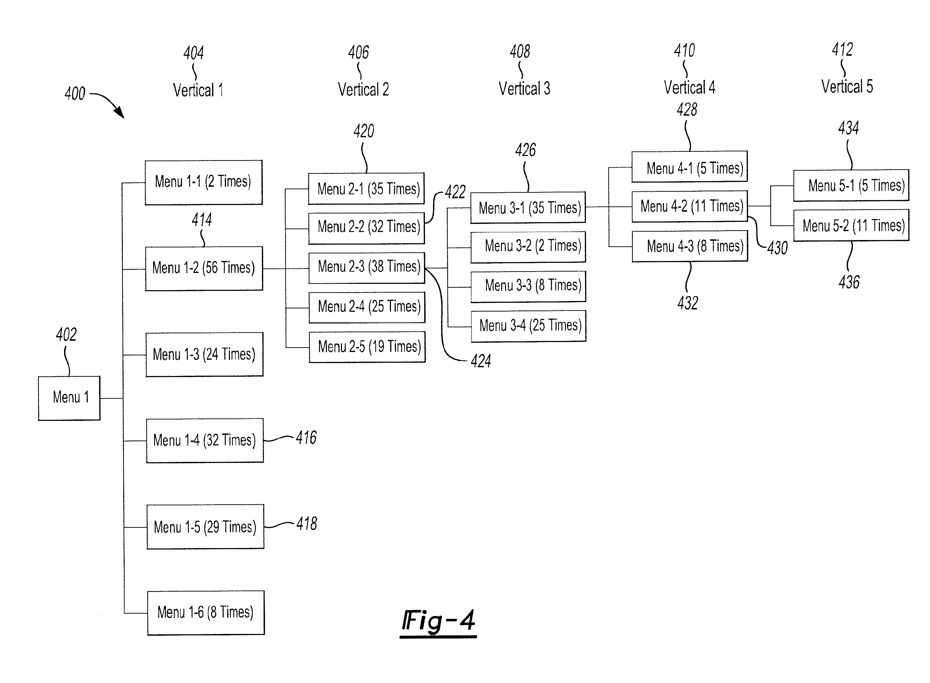

Figure 4 is a diagram of a menu and submenu display 400 illustrating a user preference at an audio mixing console interface 120. The audio mixing console 100 user interface 120 may include, but is not limited to, a touch screen, one or more buttons, a keyboard, a mouse, and so on. The user interface 120 is integrated with the audio console mixing system 101 configured with at least one processor 112 monitoring one or more functions that may include, but is not limited to, Loading Title, Patching, StripSetup, Monitoring setup, and Ganging. The user interface 120 may include a liquid crystal display (LCD) or other suitable display.

The user interface 120 may allow a user to login into the audio computing system 101 to enable the retrieval of the user's profile which may include, but is not limited to, saved StripSetups, most preferred menu/submenu options, and/or other related configurations or processing block data to allow for improved user functionality of the mixing console. The user interface 120 display 400 may present one or more menu and submenu items to a user.

For example, if a user selects menu-1 402, the system may output a predictive path which includes the following next tier submenu items 404, 406, 408, 410, 412 to a user based on the smart learn logic monitored use of the mixing console 100. The system 101 may be configured to output the next tier submenu items to a user interface based on selections made of menu-1 402 by a recognized user. The audio mixing console 100 may retrieve from local memory 114 and/or from a remote database the smart learn logic data related to the operation of the mixing console 100 based on the user's selection of menu-1 402. The predictive path data is configured from monitored use of the mixing console 100; therefore if the recognized user selects menu-1 402, the system may display five additional next tier submenu tabs 404, 406, 408, 410, 412 based on the retrieved data. The next tier submenu tabs may be populated with their related feature/function options. The system 101 may display the feature/function options under their respective submenu tab such that the most frequently selected option selections are presented to ensure a fast and simplified approach of the process of operating (e.g., setting up) the audio mixing console 100 for a mix engineer.

The user may select the menu-1 402 item on the user interface display 400 thereby enabling the system 101 to retrieve from memory 114 and output a predictive path of one or more submenu options including vertical 1 404, vertical 2 406, vertical 3 408, vertical 4 410, and vertical 5 412. The smart learn logic may enable the system 101 to display the most frequently selected options under each vertical. For example, the system 101 may display the most frequently selected options under vertical 1 404 which may include options-1-2 414, options-1-4 416, and options-1-5 418. The user may have all options displayed under submenu vertical 1 404 by requesting the system to present all options (e.g., tapping the user interface touch screen two times to request the display of all options).

The system 101 may populate a predictive path of next tier submenu items based on the selection of menu-1 402. For example, the system 101 may display the options under submenu option-1-2 414 since this is the most selected item under menu-1 402. If the user selects submenu option-1-4 416, the system may adjust the predictive path to display vertical 2 406 thru vertical 5 with items that include the most frequently used submenu options by the identified user related to option-1-4 416.

In another example, if the user selects submenu option-2-1 420, the system 101 may populate vertical 3 408 thru vertical 5 412 to include the next tier submenu items based off of the selected menu option-2-1 420 in vertical 3 408.

The system 101 may be configured to only output submenu options that have been selected the most by the user based on a predefined criteria. The predefined criteria may include a value used to compare if an option has been selected by a user a number of times greater than or less than that value. If an option is selected more times than the predefined value, the system 101 may display that option to a user interface 120. For example, based on the monitored use of the options selected by the user and if the predefined value is set to ten selections, the system 101 may then display the following options in submenu tab vertical 3 408 to include option-3-1 426 (selected thirty five times which is greater than ten), and option-3-4 (selected twenty five times which is great than ten).

The smart learn logic allows the system to predict and output a next tier submenu option prediction path that would have normally took a user to navigate through two or more menu/submenu items before reaching the desired selection. For example, illustrated in the user interface display 400, the user may select menu option-5-2 immediately instead of going through each menu/submenu item as displayed in vertical 1 404 through vertical 5 412.

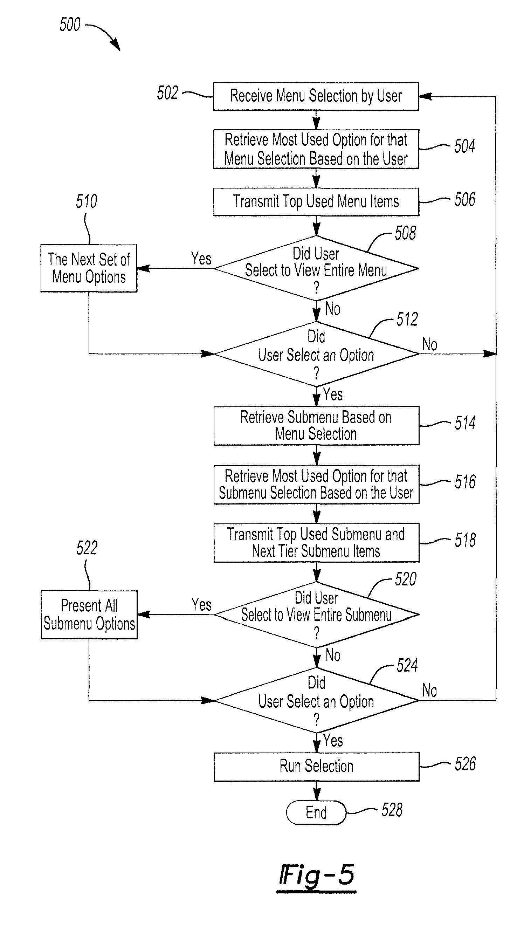

Figure 5 is a flow chart of an algorithm 500 for outputting menu and submenu selections to a user interface 120 of an audio mixing console system 101. The system 101 may improve setup time based on the monitoring of user actions and providing appropriate menus to the user based on monitored data. The system 101 may store the monitored data in local memory 114 at the audio mixing console 100, or at a remote database in communication with console.

At operation 502, the system 101 may receive a menu selection by a recognized user. The user may be recognized by the system 101 based on several techniques including, but not limited to, a user login ID before gaining access and operating the audio console. The system 101 may retrieve the most used submenu and/or next tier submenu option(s) based on the received menu selection at operation 504. The system 101 may allow a user to configure and/or define the identification for displaying the most used options on a user interface 120. For example, the configuration may limit the system 101 to retrieve and output a maximum of five submenu tabs and the respective submenu options that have been most frequently selected in prior use by the user based on a main menu selection.

At operation 506, the system 101 may transmit an output of one or more submenu and/or next tier submenu options that have been selected the most by a user. The system 101 may transmit the output to a user interface 120 display. The predictive path output may be presented in several ways on a display including, but not limited to, having the one or more submenu tabs and/or next tier submenu option tabs presented horizontally and the their respective options presented vertically under the submenu/next tier submenu tabs.

At operation 508, the system 101 may monitor input to determine if a user selected to view an entire menu of options for a submenu and/or next tier submenu instead of viewing the most selected options (e.g., the system 101 outputting all options instead of the three most selected under that submenu to a user interface 120). If the user has selected to view the entire menu of options, the system 101 may output the entire set of options for that menu/submenu selection including the most selected options at operation 510.

At operation 512, the system 101 may monitor to see if the user selected a menu/submenu option displayed on the user interface 120. If the system 101 detects no selection has been made for a predefined amount of time, the system may generate another predictive path of selections based on the initial menu/submenu selection screen. If the system receives a user selection of an option under a menu, submenu, and/or next tier submenu that is not displayed in the predictive path, the system may retrieve and/or generate one or more additional next tier submenu tabs and their respective options for display to the user interface 120 based on the option selection at operation 514.

At operation 516, the system 101 may retrieve the most used options related to the one or more submenu and/or next tier submenu tab selections based on the data generated by monitoring the recognized user. The system 101 may output the predefined number of top used submenu tabs to a user interface at operation 518. The predefined number of top used submenu items and/or next tier submenu items to be displayed to a user may be set by a user or have a manufacturer default value (e.g., a value set to three items to be displayed). The predefined number of top used submenu items may also include, but is not limited to, a discrepancy equation where the system 101 determines whether an option is selected multiple times more than all other options. The discrepancy equation compares the options available under a submenu and/or a next tier submenu tab to a predefined value, therefore the system 101 may only present one option per-submenu/next tier submenu to the user interface 120 if the discrepancy is greater than the predefined number.

At operation 520, the system 101 may transmit the output to a user interface 120 display and may monitor user input to determine if a user selected to view an entire submenu of options instead of the most selected submenu options. If the user has selected to view the entire submenu of options, the system 101 may output the entire set of options for that submenu selection including the most selected options at operation 522. If the user selects an option under a submenu tab that has a next tier submenu not presented in the predictive path, the system 101 may generate and display the next tier submenu tabs based on that selected option.

At operation 524, the system 101 may monitor to see if the user selected a submenu and/or a next tier submenu option displayed on the user interface 120. If the system 101 detects no selection for a predefined amount of time, the system 101 may generate and output another predictive path of submenu tabs and related options that are the second most used items based on the initial menu selection. If the system 101 receives a user selection of an option, the system 101 may process the feature/function based on the selection at operation 526.

Figure 6 is a diagram of a menu selection interface 600 for an audio mixing console 100. The audio mixing console 100 may have a user interface 600 that allows one or more users to login. Once the system 101 verifies the user after login, the system 101 may retrieve the data associated with the user. The data may include, but is not limited to, user preferred option selections, saved setup configurations, and/or other desired functions or setup of the audio mixing console 100.

The user menu selection interface 600 may present menu 602, submenu 606, and next tier submenu tabs 610, 614 based on the smart learn logic and/or other historical operation data stored in memory 114 by a user. The user menu selection interface 600 may be presented at a touch screen display which accepts and supports swipe and touch operations. During operation of the audio mixing console 100, the user menu selection interface 600 may provide the available quick menus 602, submenu 606, and next tier submenu tabs 610, 614 to the user based on the smart learn logic data.

For example, during setup of the audio mixing device 100 the user may select to load a title 602 from a main menu list of features/function of the audio mixing console 100. The most commonly selected submenu options under loading a title menu selection may include, but is not limited to, strip setup tab 603, load a different title 604, or load another configuration 605. The system 101 may recognize the user and based on her previous selections may perform a strip setup once she selects the load title menu option 602. Therefore, the system 101 may populate a predictive selection path based on historical selections, and output the submenu 606 and next tier submenus tabs 610, 614 related to the strip setup option.

The submenu and next tier submenu vertical option tabs may include the strip setup tab 606, load a strip setup tab 610, and channel patch tab 614. The submenu and next tier submenu options are generated based off of the smart learn logic which monitored the historical use of the audio mixing console 100 by the recognized user. The strip setup tab 606 may have the top user selected options listed for that submenu item which may include, but is not limited to, load a strip setup 607, setup master channel bay 608, and display fader bay 609.

The next tier submenu tab is generated for display by the system 101 and is based off of the smart learn logic. The next tier submenu tab in this example may include a load a strip setup tab 610. The load a strip setup tab 610 may have the top user selected options for the audio mixing console based on the recognized user displayed under the tab including a general patch 611, a channel patch page 612, and a monitoring setup 613.

The system 101 may display additional next tier submenu tabs based on predicted user selection generated from the smart learn logic. In this example, the system 101 may display an additional next tier submenu based on channel patch page 614. The channel patch page 614 may have the top user selected options displayed under the next tier submenu tab, including a go to monitoring page 615, save title 616, and go to signaling setup page 617.

The user menu selection interface 600 displayed on the touch screen device may allow the user to select the channel patch page option 612 immediately without having to navigate through two or more menu selections on a previous method and system. The user is now able to launch the channel patch page 612 function and perform his/her setup with ease while reducing time.

In another example, the user may have selected the load a different title 604 option, therefore causing the system 101 to reconfigure the predictive selection path and generate updated submenu and next tier submenu tabs since they were previously configured based on the strip setup tab option. If the user selected the load a different title 604 option, the system 101 may present a predictive path with the top selected submenu, next tier submenu, and/or options based on the recognized user's most select options related to the load a different title 604 option/function.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and can be desirable for particular applications.

## Claims

1. An audio mixing console comprising:
a user interface;
two or more audio inputs;
one or more audio outputs;
one or more mixing controls; and
at least one computer in communication with a transceiver, the transceiver capable of communication with a server remotely located from the computer, the computer configured to:
receive a command indicator of a user log-in;
monitor a selection of one or more menu options at the user interface;
record and rank the selection of the one or more menu options;
output at the user interface a path of menu and submenu items based on the recorded and ranked selection of the one or more menu options;
receive a new selection of a menu option based on the one or more menu options; and
save to memory the new selection of the menu option based on the user log-in.

2. The mixing console of claim 1, wherein the save to memory is a local RAM/ROM at the at least one controller and stored in a database at the server.

3. The mixing console of claim 1, wherein the menu and submenu item selections at the user interface includes one or more tabs having at least one option being offered.

4. The mixing console of claim 1, wherein the menu and submenu item selections is configured to output a predefined number of top selected menu options.

5. The mixing console of claim 4, wherein the predefined number of top selected menu options is provided by one of a user and a manufacturer default value.

6. The mixing console of claim 1, wherein the at least one computer is further configured to generate an updated path of submenu tabs if the one or more menu options selected is not in the path.

7. The mixing console of claim 6, wherein the updated path of submenu tabs is based on the recorded and ranked selection of the one or more menu options.

8. An audio mixing console smart learn method comprising:
receiving a user log-in from an audio mixing console having a user interface;
retrieving a preferred user selection database based on the user log-in;
monitoring a selection of one or more menu options from the user interface;
updating the preferred user selection database based on the monitored selection of the one or more menu options;
ranking the selection of the one or more menu options;
displaying at the user interface a path of menu and submenu items based on the updated preferred user selection database and the ranked one or more menu options;
receive a new selection of one or more menu options; and
transmitting to memory the new selection of menu and submenu items selected for storage based on the user log-in.

9. The smart learn method of claim 8, wherein the storage to memory is a local RAM/ROM at the at least one computer and a database at a server.

10. The smart learn method of claim 8, wherein the path of menu and submenu items at the user interface includes one or more tabs having at least one option being offered.

11. The smart learn method of claim 10, wherein the at least one option being output to the user interface is an option that is selected most by the user.

12. The smart learn method of claim 8, wherein the path of menu and submenu items may be configured to output a predefined number of top selected menu options.

13. The smart learn method of claim 8, further comprising generating an updated path of submenu tabs if the one or more menu options selected is not in the path.

14. The smart learn method of claim 13, wherein the updated path of submenu tabs is based on the recorded and ranked selection of the one or more menu options.

15. The smart learn method of claim 8, further comprising generating the preferred user selection based on a setup of one or more channel strips.
